# EUROPEAN PATENT SPECIFICATION

(11) **EP 4 715 332 B1**
(45) Date of publication and mention of the grant of the patent: **28.10.2026**
(21) Application number: 24201286.2
(22) Date of filing: 19.09.2024
(51) Int. Cl.: G01C 21/34, G01C 21/36

(54) **SELECTING A ROUTE FOR A VEHICLE BASED ON SKILL AND DIFFICULTY LEVEL**
AUSWAHL EINER ROUTE FÜR EIN FAHRZEUG AUF DER BASIS VON FERTIGKEITEN UND PROBLEMEN
SÉLECTION D'UN ITINÉRAIRE POUR UN VÉHICULE SUR LA BASE DU NIVEAU DE COMPÉTENCE ET DE DIFFICULTÉ

(43) Date of publication of application: 25.03.2026
(73) Proprietor: Volvo Truck Corporation, 405 08 Göteborg (SE)
(72) Inventor: GELSO, Esteban, 421 51 VÄSTRA FRÖLUNDA (SE); Sadeghi Kati, Maliheh, 433 51 Öjersjö (SE); Laine, Leo, 414 84 Göteborg (SE)
(74) Representative: Valea AB

(56) References cited:
- US-A1- 2022 324 461
- US-A1- 2023 332 900

## Description

### TECHNICAL FIELD

The disclosure relates generally to routing of vehicles. In particular aspects, the disclosure relates to selecting a route for a vehicle based on skill and difficulty level. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Navigating vehicles can be challenging, in particular vehicles with trailers, multi-trailer vehicles, heavy duty vehicles, buses, etc. This is due to vehicle size, articulated joints, maneuverability constraints, and blind spots which all may increase in difficulty with size or type of the vehicle. Users of vehicles such as trucks with one or more trailers or other large vehicles often face difficulties in safely navigating through narrow streets, negotiating intersections, making tight turns, operating under high traffic levels, finding suitable parking, and accurately reversing into loading docks or parking spaces. These challenges are even more difficult when considering limited visibility and increased complexity when controlling one or more trailers. This issue is particularly critical in some geographical regions such as Sweden, where heavy vehicle combinations with a length of up to 34 meters are permitted. However, the challenges may relate to any type of vehicle.

Conventional navigation of vehicles are often insufficient in addressing the specific needs of certain vehicles leading to an increased risk of accidents or damage to property and cargo when operating such vehicles.

Hence, there is a strive to improve navigation of vehicles.

Document US 2022/324461 A1 discloses a method and a system that determines the difficulty level of a plurality of routes and assigns skill level on drivers based on vehicle sensor data collected when a plurality of vehicles travels in the plurality of the routes.

### SUMMARY

According to a first aspect of the disclosure, a computer system comprising processing circuitry configured to select a route out of a set of routes for a vehicle to follow is provided. The vehicle may be a combination vehicle comprising at least two vehicle units. The processing circuitry is configured to obtain a level of difficulty of the set of routes. The level of difficulty is classified based on characteristics of the vehicle. The characteristics of the vehicle may comprise that the vehicle comprises the at least two vehicle units and optionally may further comprise physical attributes and/or characteristics of the vehicle.

The processing circuitry is configured to obtain a current skill level of an entity controlling the vehicle. The entity controlling the vehicle may be a user or an automated control system such as an Artificial Intelligence (AI) controlling entity.

The processing circuitry is configured to, based on the level of difficulty and the current skill level of the entity, select a route of the set of routes for the vehicle to travel such that the current skill level of the entity is sufficient for operating the vehicle with respect to the classified level of difficulty of the selected route.

The first aspect of the disclosure may seek to improve navigation of the vehicle. A technical benefit may include improved navigation of the vehicle where a consequence is improved vehicle control, efficiency of vehicle operations, and safety. This is since the entity can manage the difficulty of the selected route and will therefore be able to safely and efficiently be able to operate the vehicle in the selected route. Furthermore, any routes deemed too difficult for the entity to operate the vehicle in will not be selected for navigation.

While examples herein focus on selecting routes with regards to current skill level and difficulty level of routes, if there are multiple options of routes where the skill level is sufficient for the respective difficulty, any suitable secondary selection criteria may apply, e.g., selecting the route associated with the most suitable energy or fuel consumption, reduced road or tire wear, reduced traffic levels, shortest path, random selection, etc.

In examples herein 'level of skill' may be used interchangeably with the expression 'skill level'. Similarly, in examples herein 'level of difficulty' may be used interchangeably with the 'difficulty level'.

The processing circuitry is further configured to obtain information of one or more assisting functionalities of the vehicle. In these examples the processing circuitry is further configured to select the route such that the current skill level of the entity is sufficient for operating the vehicle with respect to the classified level of difficulty of the selected route by accounting for utilization of at least one of the one or more assisting functionalities for the set of routes.

A technical benefit may include improved navigation of the vehicle. This is since the route may be selected to more accurately match that the difficulty level of the route with a skill level of the entity controlling the vehicle when also accounting for utilization of assisting functionalities. This means that in some situations, the assisting functionalities may bridge the gap between the current skill level and level of difficulty of a route if the assisting functionalities apply for that route and are sufficiently helpful for the entity controlling the vehicle such that the skill level of the entity in combination with the assisting functionality meets the level of difficulty of said route. This may mean that there is a wider range of routes available for the vehicle to navigate.

Optionally in some examples, including in at least one preferred example, the level of difficulty of the set of routes further is classified for each respective route based on any one or more out of:
- characteristics of the respective route,
- a traffic situation of the respective route,
- environment data of the respective route, preferably comprising weather data of the respective route,
- historical driving records of one or more vehicles travelling the respective route, and
- driving record of the entity controlling the vehicle.

A technical benefit may include improved navigation of the vehicle. This is since the route may be selected to more accurately match the level of difficulty of the route with the current skill level of the entity controlling the vehicle. In particular, the level of difficulty of the route may be more accurately classified.

Optionally in some examples, including in at least one preferred example, the processing circuitry is configured to obtain the level of difficulty of the set of routes by being configured to any one or both of:
- receive an indication of the level of difficulty of at least a part of the set of routes, and
- classify the level of difficulty of at least a part of the set of routes based on the characteristics of the vehicle.

A technical benefit may include improved navigation of the vehicle. This is since the route may be selected to more accurately match the level of difficulty of the route with the current skill level of the entity controlling the vehicle. In particular, the level of difficulty may be more accurate as it can be obtained as already classified, and/or classified by the characteristics of the vehicle in any suitable manner. The level of difficulty may be classified based on the characteristics of the vehicle by accounting for how difficult it is for the vehicle to operate, e.g., with regards to physical attributes such as length, number of units etc. or based on the capabilities of the vehicle. For example, operating a long vehicle may be more difficult when needing to turn the vehicle into a narrow space in comparison to a shorter vehicle. In addition, other aspects such as road characteristics, e.g., slope, banking and/or environmental conditions may be used for classifying the level of difficulty.

Optionally in some examples, including in at least one preferred example, the processing circuitry is configured to obtain the current skill level of the entity controlling the vehicle by being configured to receive an input indicating the current skill level, and/or by being configured to classify the current skill level of the entity controlling the vehicle.

A technical benefit may include improved navigation of the vehicle. This is since the route may be selected to more accurately match the level of difficulty of the route with the current skill level of the entity controlling the vehicle. In particular, the skill level may be more accurate as it can be obtained as already classified, and/or be classified in any suitable manner.

Optionally in some examples, including in at least one preferred example, the processing circuitry is configured to classify the current skill level of the entity controlling the vehicle by being configured to obtain a set of data relating to when the entity is controlling the vehicle. In these examples, the set of data comprises any one or more out of
- a driving record of the entity controlling the vehicle,
- control input for controlling the vehicle,
- one or more driving behavior parameters indicative of whether one or more respective maneuvers and/or vehicle motions meets one or more respective predefined conditions,
- sensor data of one or more sensors of the vehicle,
- when the entity controlling the vehicle is a user, sensor data of the one or more sensors comprising measurements of the user,
- motion data indicative of one or more motion parameters of the vehicle.

In these examples, the processing circuitry is configured to classify the current skill level of the entity controlling the vehicle based on the obtained set of data.

A technical benefit may include improved navigation of the vehicle. This is since the route may be selected to more accurately match the level of difficulty of the route with the current skill level of the entity controlling the vehicle. In particular, the set of data may describe how the entity is controlling the vehicle and may be verified based on a predefined model and/or heuristics and/or historical driving records.

Optionally in some examples, including in at least one preferred example, the processing circuitry is configured to classify the current skill level of the entity controlling the vehicle further based on characteristics of the vehicle, and one or more characteristics of the set of routes.

A technical benefit may include improved navigation of the vehicle. This is since the route may be selected to more accurately match the level of difficulty of the route with the current skill level of the entity controlling the vehicle. In particular, the current skill level of the entity may be more accurately classified by considering the characteristics of the set of routes. In other words, the current skill level may be contextual and may depend on what types of routes are for selection. The current skill level may for example depend on a confidence level of the entity which may be determined based on the characteristics of the set of routes.

Optionally in some examples, including in at least one preferred example, the received input indicating the current skill level indicates any one or more of:
- a confidence level for the entity controlling the vehicle to operate the vehicle,
- when the entity controlling the vehicle is a user, a fatigue level for the entity controlling the vehicle to operate the vehicle, and
- when the entity controlling the vehicle is a user, a stress level for the entity controlling the vehicle to operate the vehicle.

A technical benefit may include improved navigation of the vehicle. This is since the route may be selected to more accurately match the level of difficulty of the route with the current skill level of the entity controlling the vehicle. In particular, the level of skill may be more accurate as it may be more accurate as it may indicate a current state of the entity controlling the vehicle, such as confidence, fatigue or stress which may all form part of the level of skill and/or may adjust a level of skill of the entity. Confidence as used herein may be a confidence of a user, e.g., how confident they are of their own ability to operate the vehicle, e.g., with regards to certain characteristics of the set of routes, or the confidence may also be a confidence value of a statical model forming the entity, e.g., a machine learning model or AI model.

Optionally in some examples, including in at least one preferred example, the level of difficulty of the set of routes and the current skill level of the entity controlling the vehicle are respectively classified as values or other comparable units. In these examples the processing circuitry is configured to select the route of the set of routes for the vehicle to follow such that the value of the current skill level is less than or equal to the level of difficulty of the selected route.

A technical benefit may include improved navigation of the vehicle. This is since the route may be selected to more accurately match the level of difficulty of the route with a current skill level of the entity controlling the vehicle. In particular, the current skill level and the level of difficulty may be classified or received as values, and the selection may then be based on arithmetic. While values for each of the current skill and difficulty levels may be a natural options, other options for comparing the different levels may apply, e.g., by having different categories of difficulty and/or skill with a predetermined comparison scheme.

Optionally in some examples, including in at least one preferred example, the characteristics of the vehicle comprises physical attributes. In these examples, the physical attributes of the vehicle may comprise any one or more out of:
- a type of the vehicle,
- number of and/or type of vehicle units of the vehicle,
- wheelbase and/or width of the vehicle,
- tire wear of tires of the vehicle,
- number of and/or type of articulation or coupling points of the vehicle,
- an axle configuration of the vehicle,
- availability of steered axles of towed vehicle units of the vehicle, and
- a load status or load condition of the vehicle,
- a mass of the vehicle.

A technical benefit may include improved navigation of the vehicle. This is since the route may be selected to more accurately match the level of difficulty of the route with a current skill level of the entity controlling the vehicle. In particular, since the level of difficulty is classified based on characteristics of the vehicle, the level of difficulty can be more accurately classified.

Optionally in some examples, including in at least one preferred example, the characteristics of the vehicle comprises capabilities of the vehicle. In these examples, the capabilities of the vehicle may comprise any one or more out of:
- capabilities of motion support devices of the vehicle, and
- capabilities of adjusting axle height of axles of the vehicle,
- steering capabilities of axles of the vehicle,
- tire capabilities of the vehicle, and
- one or more capabilities for distributing load.

A technical benefit may include improved navigation of the vehicle. This is since the route may be selected to more accurately match the level of difficulty of the route with a current skill level of the entity controlling the vehicle. In particular, since the level of difficulty is classified based on characteristics of the vehicle, the level of difficulty can be more accurately classified.

Optionally in some examples, including in at least one preferred example, the vehicle comprises one or more assisting functionalities for aiding the current skill level of the entity controlling the vehicle. In these examples, the one or more assisting functionalities may comprise any one or more out of:
- steering assistance for one or more predefined maneuvers or an automated steering system,
- lane keeping assistance,
- one or more driver intervention functionalities for when detected that a driver of the vehicle is in need of automated control, and
- one or more stability control functionalities.

A technical benefit may include improved navigation of the vehicle. This is since the route may be selected to more accurately match the level of difficulty of the route with a current skill level of the entity controlling the vehicle. In particular, the assisting functionalities may be accounted for effectively increasing the current skill level and/or effectively reducing the level of difficulty.

According to a second aspect of the disclosure, a vehicle comprising and/or being controlled by the computer system according to the first aspect is provided. The vehicle may be a combination vehicle comprising at least two vehicle units.

Optionally in some examples, including in at least one preferred example, the vehicle comprises a towing vehicle unit, e.g., a tractor, and at least two towed vehicle units, e.g., trailers.

According to a third aspect of the disclosure, a computer-implemented method for selecting a route out of a set of routes for a vehicle to follow is provided. The vehicle may be a combination vehicle comprising at least two vehicle units.

The method comprises obtaining a level of difficulty of the set of routes. The level of difficulty is classified based on characteristics of the vehicle.

The method comprises obtaining a current skill level of an entity controlling the vehicle.

The method comprises, based on the level of difficulty and the current skill level of the entity, selecting a route of the set of routes for the vehicle to travel such that the current skill level of the entity is sufficient for operating the vehicle with respect to the classified level of difficulty of the selected route.

Optionally in some examples, including in at least one preferred example, the method comprises obtaining information of one or more assisting functionalities of the vehicle.

Optionally in some examples, including in at least one preferred example, the method comprises selecting the route such that the current skill level of the entity is sufficient for operating the vehicle with respect to the classified level of difficulty of the selected route by accounting for utilization of at least one of the one or more assisting functionalities for the set of routes.

Optionally in some examples, including in at least one preferred example, the method comprises obtaining the level of difficulty of the set of routes by any one or both of:
- receiving an indication of the level of difficulty of at least a part of the set of routes, and
- classifying the level of difficulty of at least a part of the set of routes based on the characteristics of the vehicle.

Optionally in some examples, including in at least one preferred example, the method comprises obtaining the current skill level of the entity controlling the vehicle comprises any one or both of:
- receiving an input indicating the current skill level, and/or
- classifying the current skill level of the entity controlling the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a flow chart of an exemplary method according to an example.
**FIG. 3** is a table illustrating an example.
**FIG. 4** is another view of **FIG. 1****,** according to an example.
**FIG. 5** is a flow chart of an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Example herein relates to selecting a route with respect to skill level of an entity controlling a vehicle and with respect to a difficulty to travel a set of routes.

In examples herein it may be considered that there may be varying skill levels of controlling entities such as drivers. This means that routing should not be performed the same for all entities controlling vehicles as it should be adapted according to a current skill.

To further add to this challenge, as existing technology lacks accounting for driver proficiency there is a need to provide tailored driver recommendation and assistance considering both the complexities of multi-trailer vehicles dynamics, and the complexity of the maneuvers, and the skill levels of their drivers. Such methods may be provided in examples herein.

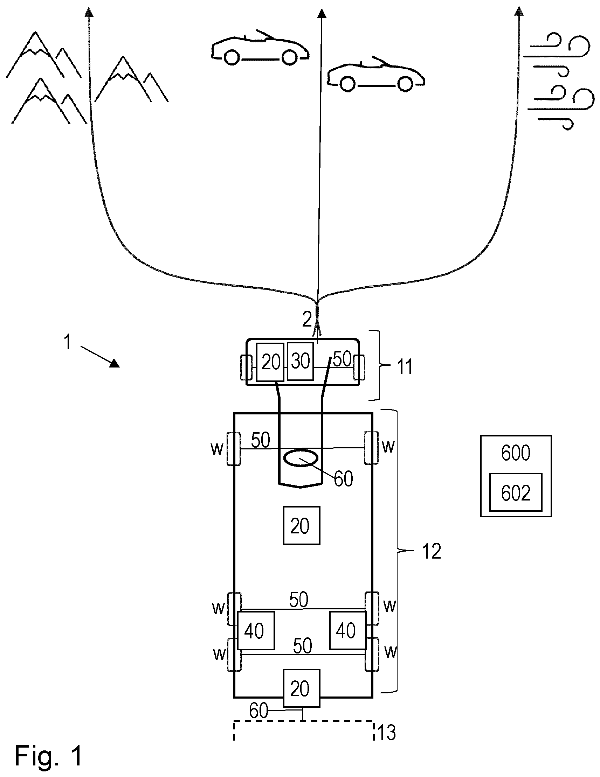

**FIG. 1** is an exemplary system diagram of a **vehicle 1** according to an example.

The vehicle 1 may be any suitable vehicle, e.g., any of a: car, truck, bus, heavy duty vehicle, construction equipment, combination vehicle comprising one or more vehicle units.

Preferably, the vehicle 1 is a combination vehicle comprising at least two **vehicle units 11, 12, 13,** e.g., a tractor and a trailer. The vehicle 1 may be a combination vehicle comprising a towing vehicle unit 11, e.g., a tractor, and at least two towed vehicle units 12, 13, e.g., at least two trailers.

The vehicle 1 may comprise a number of **wheels w and** respective tires.

The vehicle 1 may comprise one or more **axles 50.** The one or more axles 50 may be part of any axle configuration. Each axle may respectively be any one or more of: a steered axle and a driven axle.

The vehicle 1 may comprise **one or more sensors 20.** The one or more sensors 20 may be of any suitable type and as a non-limiting example may comprise any one or more of:
- one or more cameras,
- one or more Light Detection and Ranging (Lidar) sensor,
- one or more wheel and/or vehicle speed sensors, and
- one or more Inertial Measurement Units (IMUs).

The vehicle 1 may comprise a **user interface 30** which may comprise any suitable functions for inputting instructions or commands to the vehicle 1 and/or outputting information from the vehicle 1 such as haptic, audio or visual feedback to a user of the vehicle. If the user of the vehicle is remote, the user interface 30 may also be remote to the vehicle, e.g., if a user is partly or fully remote controlling the vehicle 1.

When the vehicle 1 comprises multiple vehicle units, the vehicle 1 may comprise one or more coupling points 60 such as fifth wheel couplings and/or towbar couplings. The one or more coupling points 60 may have respective associated articulation angles, e.g., measured by the one or more sensors 20.

The vehicle 1 may comprise **Motion Support Devices (MSDs) 40,** e.g., for controlling a motion of the vehicle and/or controlling motion of each respective wheel w using different respective MSD 40. The MSDs 40 may comprise any one or more out of:
- one or more motors or engines, e.g., for driving the one or more axles 50 and/or for driving respective wheels w, and
- one or more brakes,
- one or more systems for lifting axles of the vehicle,
- one or more suspension systems for controlling a vertical motion or load applied to axles of the vehicle, e.g., for lifting the one or more axles 50 of the vehicle 1.

In examples herein. the vehicle 1 may comprise and/or be controlled by a **computer system 600** and/or a **processing circuitry 602** therein.

The computer system 600 and/or the processing circuitry 602 therein may be an Electronic Control Unit (ECU) of the vehicle 1.

The computer system 600 and/or the processing circuitry 602 therein may be comprised in the vehicle 1 or may be comprises in a location remote from the vehicle 1, e.g., in a server or as part of a cloud service.

The computer system 600 and/or the processing circuitry 602 therein may be able to control any suitable aspect of the vehicle, e.g., and may be communicatively connected to any suitable entity of the vehicle 1 for said purpose. For example, the computer system 600 and/or the processing circuitry 602 therein may control route selection and/or motion and/or steering of the vehicle 1; and/or the processing circuitry 602 may utilize the user interface 30 to facilitate communication and/or control instructions between the entity controlling the vehicle 1 and the vehicle 1.

In examples herein, the entity controlling the vehicle 1 may be a user, e.g., a driver, or an automated driving model such as performed by a machine learning model or AI model also referred to as a virtual driver.

In examples herein, a route selection may be made for the vehicle 1. The route selection may be from a **set of routes 2,** e.g., to perform any suitable mission or task.

The route selection may be performed based on a level of difficulty of the set of routes 2 and a current skill level of the entity controlling the vehicle 1. In other words, the route selection ensures that the entity controlling the vehicle 1 does not enter a route too difficult for the entity to operate the vehicle 1 in. The route selection may further relate to a secondary selection criteria, e.g., if many suitable options are available.

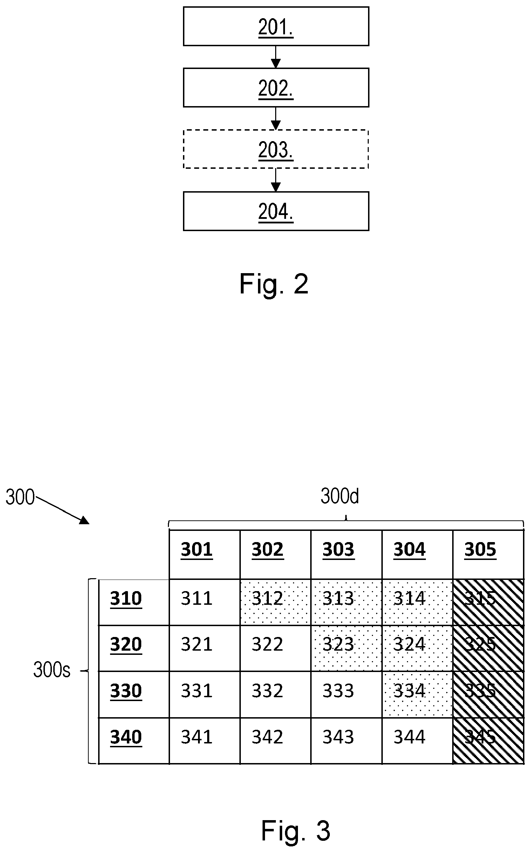

The level of difficulty of the set of routes 2 may depend on a number of different aspects which will be discussed, e.g., depending on area such as mountainous or hilly areas, depending on traffic levels, or depending on weather conditions such as strong wind. However, in particular the level of difficulty is classified based on characteristics of the vehicle 1 such as that the vehicle comprises two vehicle units or other physical attributes or capabilities of the vehicle. The capabilities and physical attributes can be any suitable kind, and some will be discussed with reference to FIG. 2. This means that the level of difficulty can be adapted to the characteristics of the vehicle. Furthermore, the examples herein relate to selecting a route based on a current skill of the vehicle. In this way, the selection is adapted to the entity controlling the vehicle and will ensure that a route selection will be sufficiently easy for the entity to operate the vehicle 1 into with respect to the level of difficulty and the current skill level. In some examples, assisting functionalities such as lane keeping assistance may also be accounted for when performing the selection and/or considering skill level or level of difficulty.

**FIG. 2** is a flow chart of an exemplary computer-implemented method for selecting a route out of the set of routes 2 for the vehicle 1 to follow. The method comprises the following actions which may be performed in any suitable order. The computer system 600 and/or the processing circuitry 602 therein may be configured to perform the method according to the below actions.

### Action 201

The method comprises obtaining a level of difficulty of the set of routes 2. The level of difficulty is classified based on characteristics of the vehicle 1. The characteristics of the vehicle may comprise that the vehicle 1 is a combination vehicle comprising at least two vehicle units.

The level of difficulty of each route out of the set of routes 2 may further be classified, e.g., besides considering the characteristics of the vehicle, based on any one or more out of:
- characteristics of the respective route, e.g., turning radiuses, comprising hills, angles of declines/inclines, surface area, whether or not the vehicle 1 can borrow lane area when needing to turn, grip margin of the route maximum sweep path versus road dimension, etc.
- a traffic situation of the respective route, e.g., comprising busy traffic levels, pedestrian traffic, wild life crossing hazards, etc.
- environment data of the respective route, preferably comprising weather data of the respective route and/or indication if the respective route is in risk of being slippery,
- historical driving records of one or more vehicles travelling the respective route, e.g., and optionally indication whether or not they were involved in any accidents or hazardous situations,
- driving record of the entity controlling the vehicle 1, e.g., if the entity has travelled the route or similar routes before and whether or not such travels have resulted in accidents or hazardous situations.

In other words, while examples herein particularly consider the characteristics of the vehicle 1, as this may be the major component of difficulty for operating the vehicle 1, other aspects may further be considered when classifying the difficulty, in combination with considering the characteristics of the vehicle 1. For example, the characteristics of a respective route may indicate that a difficult turn may be part of the route. While such a turn may be difficult on its own, considering the characteristics of the vehicle 1 with at least two vehicle units may increase the difficulty, and further, when the vehicle 1 is very long and/or may lack load distributing capabilities, the turning may be even more difficult.

The characteristics of the respective route may additionally or alternatively comprise any of: a complex intersection, a narrow road, one or more road conditions, one or more slopes such as steep slopes with at least a certain incline, banked roads, construction or roadwork, etc.

In some examples, obtaining the level of difficulty of the set of routes 2 may comprise receiving an indication of the level of difficulty of at least a part of the set of routes 2. Additionally or alternatively, obtaining the level of difficulty of the set of routes 2 may comprise classifying the level of difficulty of at least a part of the set of routes 2 based on the characteristics of the vehicle 1. When both options are performed, they may be used to improve accuracy of the classification and/or for classification of different routes in the set of routes 2.

In some examples, the characteristics of the vehicle 1 may be predefined and/or detected and obtained as part of actions 201.

The characteristics may be indicative of physical attributes and/or capabilities of the vehicle 1.

Below is a non-limiting list of examples of physical attributes and/or capabilities. It should be noted that any physical attribute or capability may be part of examples herein, at least when they affect how the vehicle 1 needs to be controlled to be able to perform maneuvers of examples herein.

The physical attributes of the vehicle 1 may comprise type of the vehicle 1, e.g., whether or not the vehicle 1 is a truck, car, bus, construction equipment, type of vehicle combination, etc.

The physical attributes of the vehicle 1 may comprise number of vehicle units of the vehicle 1 and/or number of trailers of the vehicle 1.

The physical attributes of the vehicle 1 may comprise length and/or width of the vehicle 1.

The physical attributes of the vehicle 1 may comprise wheelbase and/or width of the vehicle 1.

The physical attributes of the vehicle 1 may comprise tire wear of tires of the vehicle 1.

The physical attributes of the vehicle 1 may comprise tire properties such as any one or more out of stiffness longitudinal cornering, vertical stiffness/cornering, rolling resistance, longitudinal and/or lateral tire losses

The tire wear and/or tire properties may relate to and/or may indicate at least part of a road friction coefficient.

The physical attributes of the vehicle 1 may comprise the one or more articulation points and/or the one or more coupling points 60 of the vehicle 1.

The physical attributes of the vehicle 1 may comprise an axle configuration of the vehicle 1, e.g., including any one or more out of a number of axles of the vehicle 1, a position of the axles of the vehicle 1, and a type of the axles of the vehicle 1.

The physical attributes of the vehicle 1 may comprise a mass of the vehicle 1, and/or different vehicle units of the vehicle 1.

The physical attributes of the vehicle 1 may comprise distribution of load of the vehicle such as per vehicle unit, axle, and/or wheel.

The physical attributes of the vehicle 1 may comprise a center of gravity of respective vehicle units of the vehicle 1, e.g., in one, two or three dimensions, such as along a longitudinal axis, lateral axis, and/or height axis.

The capabilities of the vehicle 1 may comprise capabilities of the MSDs 40 of the vehicle 1, e.g., ability for propulsion, steering, and/or braking per wheel or axle.

The capabilities of the vehicle 1 may comprise capabilities of adjusting axle height of axles of the vehicle 1 and/or lifting axles of the vehicle 1.

The capabilities of the vehicle 1 may comprise steering capabilities of axles of the vehicle 1,

The capabilities of the vehicle 1 may comprise tire capabilities of the vehicle 1, e.g., tire forces, control of longitudinal and/or lateral slip.

The capabilities of the vehicle 1 may comprise one or more capabilities for distributing load of the vehicle 1 and possibly between different vehicle units of the vehicle 1, e.g., when using active suspensions on individual wheels.

The capabilities of the vehicle 1 may comprise one or more capabilities for handling tire forces of the vehicle 1 such as for cornering, traction, braking or torque.

The capabilities of the vehicle 1 may comprise one or more capabilities for handling a tire-road interaction, e.g., surface conditions, tire parameters such as pressure (inflate or deflate tires) for affecting a friction coefficient.

The capabilities of the vehicle 1 may comprise one or more capabilities for power supplies or cooling system of the vehicle 1, e.g., wherein these capabilities may be considered/aggregated in the capabilities of the above-mentioned MSDs 40.

Capabilities of examples herein may further indicate respective limitations.

The level of difficulty may further be predefined.

### Action 202

The method comprises obtaining a current skill level of an entity controlling the vehicle 1.

In some examples, obtaining the current skill level of the entity controlling the vehicle 1 may comprise receiving an input indicating the current skill level. Additionally, or alternatively, obtaining the current skill level of the entity controlling the vehicle 1 may comprise classifying the current skill level of the entity controlling the vehicle 1. When both options are performed, they may be used to improve accuracy of the classification.

In some examples, classifying the current skill level of the entity controlling the vehicle 1 comprises obtaining a set of data relating to when the entity is controlling the vehicle 1. The set of data may comprises any one or more out of
- a driving record of the entity controlling the vehicle 1, e.g., indicating any one or more of: performing operations in critical areas, traffic levels, whether or not performing frequent lane changes or aggressive traffic behaviour, traffic violations, and general risk taking of the entity,
- control input for controlling the vehicle 1, e.g., pedal and/or steering wheel position/movement,
- one or more driving behavior parameters, which parameters may be indicative of whether one or more respective maneuvers and/or vehicle motions meets one or more respective predefined conditions,
- sensor data of one or more sensors 20 of the vehicle 1,
- when the entity controlling the vehicle 1 is a user, sensor data of the one or more sensors 20 comprising measurements of the user, e.g., video or photos of the user,
- motion data indicative of one or more motion parameters of the vehicle 1.

In some examples classifying the current skill level of the entity controlling the vehicle 1 may be performed based on the obtained set of data, e.g., using a predefined model, heuristic, or a statistical model. For example, the current skill level may be classified based on whether or not the entity controls the vehicle in a smooth and controlled manner, e.g.,. whether or not any motion parameters stay within predefined intervals or follow a predefined comfort model. Alternatively, the sensor data or control input may be assessed with a machine learning model trained to assess a current skill level based on control input and/or sensor data, e.g., trained based on truth labelling and/or whether or not accidents occur in an associated time domain of obtaining the sensor data or control input. In other words, any suitable classification mechanism may occur, which may use any suitable information of how the vehicle or the entity is behaving. If the entity is a user, e.g., a driver, sensor data of the user may further be used to detect a state of the user, e.g., stressed, confident, fatigue, concentration, gaze, health state, etc.

The one or more driving behavior parameters may comprise any one or more out of:
- smoothness of the maneuvers, e.g., according to any suitable model,
- number of over-correction maneuvers, e.g., when the vehicle is not controlled correctly,
- lack of control of the vehicle, e.g., harsh braking and acceleration, excessive steering wheel movements, understeering/oversteering, frequent distractions and missing traffic signs and signals, etc.

When obtaining the current skill level of the entity controlling the vehicle 1 comprising receiving input, the received input indicates any one or more of:
- a confidence level for the entity controlling the vehicle 1 to operate the vehicle 1, e.g., how confident a user or machine learning model is in its ability to operate the vehicle 1 with respect to the current characteristics of the vehicle 1,
- when the entity controlling the vehicle 1 is a user, a fatigue level for the entity controlling the vehicle 1 to operate the vehicle 1, and
- when the entity controlling the vehicle 1 is a user, a stress level for the entity controlling the vehicle 1 to operate the vehicle 1.

The received input may be received via the user interface 30.

The received input may further be measured by the one or more sensors 20 of the vehicle 1, e.g., by a camera in the cabin of the vehicle 1 and/or by assessing input of the user for controlling the vehicle 1.

In some examples classifying the current skill level of the entity controlling the vehicle 1 may be based on characteristics of the vehicle 1, and based on one or more characteristics of the set of routes 2. This means that the skill level may be classified in a reactive manner with respect to the characteristics of the set of routes 2. For example, the skill level may go down or up depending on the characteristics of the set of routes 2 and/or the skill level may relate to a confidence level of travelling the set of routes 2 with respect to the characteristics.

### Action 203

According to some examples, the method may comprise obtaining information of one or more assisting functionalities of the vehicle 1.

The one or more assisting functionalities may comprise any suitable Advanced Driver-Assistance Systems (ADAS) functionalities.

The one or more assisting functionalities may comprise any suitable functionalities which may help the entity controlling the vehicle 1 to effectively raise the current skill level and/or to reduce the level of difficulty of one or more routes out of the set of routes 2.

The one or more assisting functionalities may be used for aiding the current skill level of the entity controlling the vehicle 1. The one or more assisting functionalities may comprise any one or more out of:
- steering assistance for one or more predefined maneuvers or an automated steering system,
- lane keeping assistance, e.g., for nudging a vehicle in position,
- one or more driver intervention functionalities for when detected that a driver of the vehicle 1 is in need of automated control or vice versa, and
- one or more stability control functionalities.

### Action 204

The method comprises selecting a route of the set of routes 2 for the vehicle 1 to travel based on the level of difficulty and the current skill level of the entity. The selection of the route is made such that the current skill level of the entity is sufficient for operating the vehicle 1 with respect to the classified level of difficulty of the selected route.

Sufficient as used herein may mean that the level of difficulty of the route is not too difficult for the entity to operate the vehicle 1 in, considering the current skill level of the entity.

In some examples, the route may be selected such that the current skill level of the entity is sufficient for operating the vehicle 1 with respect to the classified level of difficulty of the selected route by accounting for utilization of at least one of the one or more assisting functionalities for the set of routes 2, e.g., as obtained in Action 203. In other words, when the assisting functionalities can fill a gap between the current skill level and the level of difficulty of a route, such a route can be selected as well.

In some examples herein, multiple routes out of the set of routes 2 may have a level of difficulty such that they can be selected for the vehicle 1 to follow with respect to the skill level of the entity and optionally considering the one or more assisting functionalities. In these situations, a secondary selection criteria or criterion may apply. For example, the easiest route may be selected, or a random route may be selected, or a route may be selected optimized for any suitable parameter, e.g., lowest wear of the vehicle 1, lowest fuel, energy, or air consumption of the vehicle, safest route, fastest route, shortest route, etc.

In some examples, the level of difficulty of the set of routes 2 and the current skill level of the entity controlling the vehicle 1 are respectively classified as values or other comparable units. In some of these examples, selecting the route of the set of routes 2 for the vehicle 1 to follow may be performed such that the value of the current skill level is less than or equal to the level of difficulty of the selected route.

In some examples herein, when selecting a route, it may be considered for a first candidate route, if used, the vehicle 1 with multiple trailers may be able to borrow area from an opposite lane making the route easier. A second candidate route may relate to a higher percentage of dangerous driving and requires more advanced skills, which means that the second candidate route is more difficult than the first candidate route. The first candidate route may therefore be selected, at least if the skill level of the entity controlling the level does not match the difficulty level of the second candidate route.

In some examples herein selecting a route out of the set of routes may comprise comparing that the level of skill is greater than or equal to the level of difficulty of the route to be selected. The one or more assisting functionalities, if used for that route, may act as an addition or coefficient to the level of skill according to any suitable model or heuristics.

In some examples herein selecting a route out of the set of routes may comprise selecting between turning right or turning left in an intersection, wherein the turn is selected based on the level of difficulty and the skill level of the entity controlling the vehicle 1.

**FIG. 3** is a table 300 illustrating an example.

The table illustrates a relationship between level of skill of the entity controlling the vehicle 1 and difficulty level of routes in the set of routes 2.

The rows of the table 300 indicates an **overall skill level of the entity 300s** controlling the vehicle 1 and the columns indicate **example difficulty level 300d** of a route.

Each row may be associated with an overall skill level, e.g., **beginner 310, moderate 320, senior 330, expert 340,** and/or with values representing the level of skill 1, 2, 3, 4.

The current level of skill of examples herein may be any of the above skills, at least initially. When considering the one or more assisting functionalities, the current level of skill may shift to a more experienced row.

When the entity controlling the vehicle 1 is a user such as a driver, the user loses confidence, gets tired etc., the level of skill may shift over time, e.g., based on monitoring the skill of the user or based on input from the user. For example, while the user may be skilled, if the user is tired, the user may not have sufficient energy to travel on complex routes and therefor indicate their current skill to be of a beginner or that the user is tired such that the examples herein consider the current skill level to be lower.

The difficulties may also be associated with respective difficulties per column, e.g., **easy 301, moderate 302, difficult 303, very difficult 304, hazardous 305,** and/or with values representing the level of difficulty, 1, 2, 3, 4, 5.

The level of difficulty for routes may be any of the above.

When the current level of skill corresponds to a row of FIG.3, the current level of skill may relate to a sufficient skill to operate in a route of a corresponding column position indicating difficulty level. In other words, a level of skill of moderate 320 may be sufficient to travel routes with the difficulty level of moderate 302, a level of skill of senior 330 may be sufficient to travel routes with the difficulty level of difficult 303, etc.

The **dotted cells 312, 313, 314, 323, 324, 334** may indicate routes not possible for travel with the respective skill level unless the gap between the skill level and the level of difficulty can be bridged by the use of the one or more assisting functionalities.

The one or more striped cells may indicate routes not possible to operate considering the current level of skill.

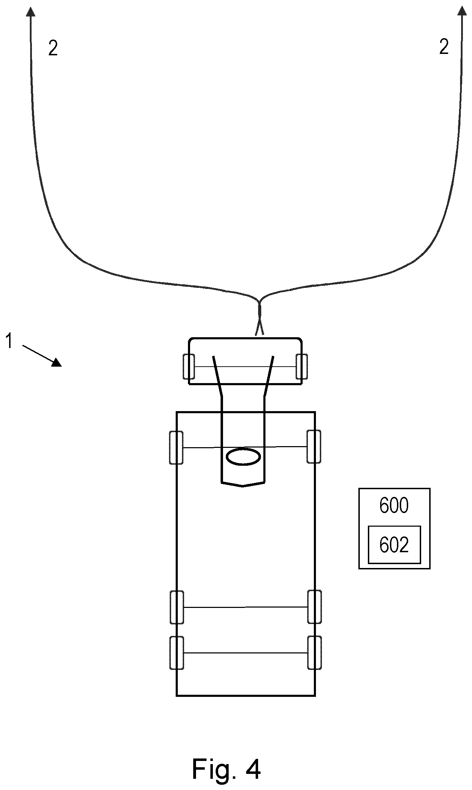

**FIG. 4** is another view of **FIG. 1****,** according to an example. The computer system 600 comprising the processing circuitry 602 configured to select a route out of the set of routes 2 for the vehicle 1 to follow is provided. The vehicle 1 may be a combination vehicle comprising at least two vehicle units. The processing circuitry 602 is configured to obtain a level of difficulty of the set of routes 2. The level of difficulty is classified based on characteristics of the vehicle 1. The processing circuitry 602 is configured to obtain a current skill level of an entity controlling the vehicle 1. The processing circuitry 602 is configured to, based on the level of difficulty and the current skill level of the entity, select a route of the set of routes 2 for the vehicle 1 to travel such that the current skill level of the entity is sufficient for operating the vehicle 1 with respect to the classified level of difficulty of the selected route.

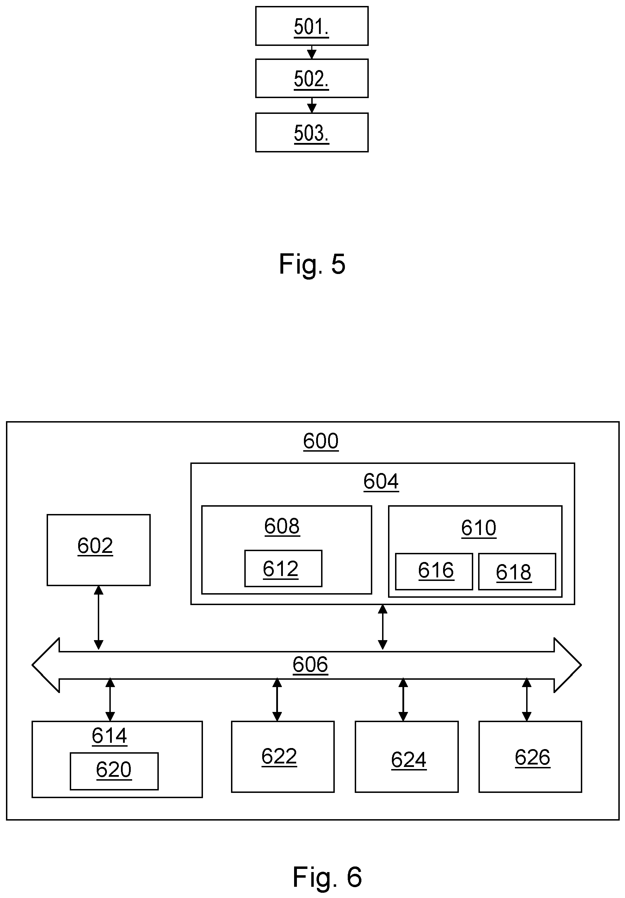

**FIG. 5** is a flow chart of an exemplary computer-implemented method for selecting a route out of the set of routes 2 for the vehicle 1 to follow is provided. The vehicle 1 may be a combination vehicle comprising at least two vehicle units. The method comprises the following actions which may be combined with the above examples or with the subject matter of the claims in any suitable manner.

### Action 501

The method comprises obtaining a level of difficulty of the set of routes 2. The level of difficulty is classified based on characteristics of the vehicle 1.

### Action 502

The method comprises obtaining a current skill level of an entity controlling the vehicle 1.

### Action 503

The method comprises, based on the level of difficulty and the current skill level of the entity, selecting a route of the set of routes 2 for the vehicle 1 to travel such that the current skill level of the entity is sufficient for operating the vehicle 1 with respect to the classified level of difficulty of the selected route.

**FIG. 6** is a schematic diagram of a computer system 600 for implementing examples disclosed herein. The computer system 600 is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which may be combined with the above examples or with the subject matter of the claims in any suitable manner.
Example 1. A computer system 600 comprising processing circuitry 602 configured to select a route out of a set of routes 2 for a vehicle 1 to follow, optionally, the vehicle 1 being a combination vehicle comprising at least two vehicle units, the processing circuitry 602 being configured to:
   - obtain a level of difficulty of the set of routes 2, wherein the level of difficulty is classified based on characteristics of the vehicle 1,
   - obtain a current skill level of an entity controlling the vehicle 1,
   - based on the level of difficulty and the current skill level of the entity, select a route of the set of routes 2 for the vehicle 1 to travel such that the current skill level of the entity is sufficient for operating the vehicle 1 with respect to the classified level of difficulty of the selected route.
Example 2. A computer system 600 according to Example 1 wherein the processing circuitry 602 is further configured to:
   - obtain information of one or more assisting functionalities of vehicle, and
   - select the route such that the current skill level of the entity is sufficient for operating the vehicle 1 with respect to the classified level of difficulty of the selected route by accounting for utilization of at least one of the one or more assisting functionalities for the set of routes 2.
Example 3. A computer system 600 according to any of Examples 1-2, wherein the level of difficulty of the set of routes 2 further is classified for each respective route based on any one or more out of:
   - characteristics of the respective route,
   - a traffic situation of the respective route,
   - environment data of the respective route, preferably comprising weather data of the respective route,
   - historical driving records of one or more vehicles travelling the respective route, and
   - driving record of the entity controlling the vehicle 1.
Example 4. A computer system 600 according to any of Examples 1-3, wherein the processing circuitry 602 is configured to obtain the level of difficulty of the set of routes 2 by being configured to any one or both of:
   - receive an indication of the level of difficulty of at least a part of the set of routes 2, and
   - classify the level of difficulty of at least a part of the set of routes 2 based on the characteristics of the vehicle 1.
Example 5. A computer system 600 according to any of Examples 1-4, wherein the processing circuitry 602 is configured to obtain the current skill level of the entity controlling the vehicle 1 by being configured to receive an input indicating the current skill level, and/or by being configured to classify the current skill level of the entity controlling the vehicle 1.
Example 6. The computer system 600 according to Example 5 wherein the processing circuitry 602 is configured to classify the current skill level of the entity controlling the vehicle 1 by being configured to:
   - obtain a set of data relating to when the entity is controlling the vehicle 1, the set of data comprising any one or more out of
      ∘ a driving record, and
      ∘ control input for controlling the vehicle 1,
      ∘ one or more driving behavior parameters indicative of whether one or more respective maneuvers and/or vehicle motions meets one or more respective predefined conditions,
      ∘ sensor data of one or more sensors 20 of the vehicle 1,
      ∘ when the entity controlling the vehicle 1 is a user, sensor data of the one or more sensors 20 comprising measurements of the user,
      ∘ motion data indicative of one or more motion parameters of the vehicle 1; and
   - classify the current skill level of the entity controlling the vehicle 1 based on the
      obtained set of data.
Example 7. The computer system 600 according to Example 5 or 6 wherein the processing circuitry 602 is configured to classify the current skill level of the entity controlling the vehicle 1 further based on characteristics of the vehicle 1, and one or more characteristics of the set of routes 2.
Example 8. The computer system 600 according to any of Examples 5-7 wherein the received input indicates any one or more of:
   - a confidence level for the entity controlling the vehicle 1 to operate the vehicle 1,
   - when the entity controlling the vehicle 1 is a user, a fatigue level for the entity controlling the vehicle 1 to operate the vehicle 1, and
   - when the entity controlling the vehicle 1 is a user, a stress level for the entity controlling the vehicle 1 to operate the vehicle 1.
Example 9. The computer system 600 according to any of Examples 1-8 wherein the level of difficulty of the set of routes 2 and the current skill level of the entity controlling the vehicle 1 are respectively classified as values or other comparable units, and wherein the processing circuitry 602 is configured to select the route of the set of routes 2 for the vehicle 1 to follow such that the value of the current skill level is less than or equal to the level of difficulty of the selected route.
Example 10. The computer system 600 according to any of Examples 1-9, wherein the characteristics of the vehicle 1 comprises physical attributes, wherein the physical attributes of the vehicle 1 comprises any one or more out of:
   - a type of the vehicle 1,
   - number of and/or type of vehicle units of the vehicle 1,
   - wheelbase and/or width of the vehicle 1,
   - tire wear of tires of the vehicle 1,
   - number of and/or type of articulation or coupling points of the vehicle 1,
   - an axle configuration of the vehicle 1,
   - availability of steered axles of towed vehicle units of the vehicle 1, and
   - a load status or load condition of the vehicle 1,
   - a mass of the vehicle 1.
Example 11. The computer system 600 according to any of Examples 1-10, wherein the characteristics of the vehicle 1 comprises capabilities of the vehicle 1, and wherein the capabilities of the vehicle 1 comprises any one or more out of:
   - capabilities of motion support devices of the vehicle 1, and
   - capabilities of adjusting axle height of axles of the vehicle 1,
   - steering capabilities of axles of the vehicle 1,
   - tire capabilities of the vehicle 1, and
   - one or more capabilities for distributing load.
Example 12. The computer system 600 according to any of Examples 1-11, wherein the vehicle 1 comprises one or more assisting functionalities for aiding the current skill level of the entity controlling the vehicle 1, the one or more assisting functionalities comprising any one or more out of:
   - steering assistance for one or more predefined maneuvers or an automated steering system,
   - lane keeping assistance,
   - one or more driver intervention functionalities for when detected that a driver of the vehicle 1 is in need of automated control, and
   - one or more stability control functionalities.
Example 13. A vehicle comprising and/or being controlled by the computer system 600 according to any one of Examples 1-11, and optionally wherein the vehicle 1 is a combination vehicle comprising at least two vehicle units.
Example 14. The vehicle of Example 13 comprising a towing vehicle unit and at least two towed vehicle units.
Example 15. A computer-implemented method for selecting a route out of a set of routes 2 for a vehicle 1 to follow, optionally the vehicle 1 being a combination vehicle comprising at least two vehicle units, the method comprising:
   - obtaining 201, 501 a level of difficulty of the set of routes 2, wherein the level of difficulty is classified based on characteristics of the vehicle 1,
   - obtaining 202, 502 a current skill level of an entity controlling the vehicle 1,
   - based on the level of difficulty and the current skill level of the entity, selecting 204, 503 a route of the set of routes 2 for the vehicle 1 to travel such that the current skill level of the entity is sufficient for operating the vehicle 1 with respect to the classified level of difficulty of the selected route.
Example 16. The method according to Example 15 further comprising:
   - obtaining 203 information of one or more assisting functionalities of the vehicle, and
   - selecting 204 the route such that the current skill level of the entity is sufficient for operating the vehicle 1 with respect to the classified level of difficulty of the selected route by accounting for utilization of at least one of the one or more assisting functionalities for the set of routes 2.
Example 17. The method according to Example 15 or 16 wherein obtaining 201 the level of difficulty of the set of routes 2 comprises any one or both of:
   - receiving an indication of the level of difficulty of at least a part of the set of routes 2, and
   - classifying the level of difficulty of at least a part of the set of routes 2 based on the characteristics of the vehicle 1.
Example 18. The method according to any of Examples 15-17 wherein obtaining 202 the current skill level of the entity controlling the vehicle 1 comprises any one or both of:
   - receiving an input indicating the current skill level, and/or
   - classifying the current skill level of the entity controlling the vehicle 1.
Example 19. A computer program product comprising program code for performing, when executed by the processing circuitry 602, the method of any of Examples 15-18.
Example 20. A non-transitory computer-readable storage medium comprising instructions, which when executed by the processing circuitry 602, cause the processing circuitry 602 to perform the method of any of Examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to select a route out of a set of routes (2) for a vehicle (1) to follow, the processing circuitry (602) being configured to:
- obtain a level of difficulty of the set of routes (2), wherein the level of difficulty is classified based on characteristics of the vehicle (1),
- obtain a current skill level of an entity controlling the vehicle (1),
- based on the level of difficulty and the current skill level of the entity, select a route of the set of routes (2) for the vehicle (1) to travel such that the current skill level of the entity is sufficient for operating the vehicle (1) with respect to the classified level of difficulty of the selected route,
wherein the processing circuitry (602) is further configured to:
- obtain information of one or more assisting functionalities of vehicle, and
- select the route such that the current skill level of the entity is sufficient for operating the vehicle (1) with respect to the classified level of difficulty of the selected route by accounting for utilization of at least one of the one or more assisting functionalities for the set of routes (2).

2. A computer system (600) according to claim 1, wherein the level of difficulty of the set of routes (2) further is classified for each respective route based on any one or more out of:
- characteristics of the respective route,
- a traffic situation of the respective route,
- environment data of the respective route, preferably comprising weather data of the respective route,
- historical driving records of one or more vehicles travelling the respective route, and
- driving record of the entity controlling the vehicle (1).

3. A computer system (600) according to any of claims 1-2, wherein the processing circuitry (602) is configured to obtain the level of difficulty of the set of routes (2) by being configured to any one or both of:
- receive an indication of the level of difficulty of at least a part of the set of routes (2), and
- classify the level of difficulty of at least a part of the set of routes (2) based on the characteristics of the vehicle (1).

4. A computer system (600) according to any of claims 1-3, wherein the processing circuitry (602) is configured to obtain the current skill level of the entity controlling the vehicle (1) by being configured to receive an input indicating the current skill level, and/or by being configured to classify the current skill level of the entity controlling the vehicle (1).

5. The computer system (600) according to claim 4 wherein the processing circuitry (602) is configured to classify the current skill level of the entity controlling the vehicle (1) by being configured to:
- obtain a set of data relating to when the entity is controlling the vehicle (1), the set of data comprising any one or more out of
∘ a driving record, and
∘ control input for controlling the vehicle (1),
∘ one or more driving behavior parameters indicative of whether one or more respective maneuvers and/or vehicle motions meets one or more respective predefined conditions,
∘ sensor data of one or more sensors (20) of the vehicle (1),
∘ when the entity controlling the vehicle (1) is a user, sensor data of the one or more sensors (20) comprising measurements of the user,
∘ motion data indicative of one or more motion parameters of the vehicle (1); and
- classify the current skill level of the entity controlling the vehicle (1) based on the obtained set of data.

6. The computer system (600) according to any of claims 4-5 wherein the received input indicates any one or more of:
- a confidence level for the entity controlling the vehicle (1) to operate the vehicle (1),
- when the entity controlling the vehicle (1) is a user, a fatigue level for the entity controlling the vehicle (1) to operate the vehicle (1), and
- when the entity controlling the vehicle (1) is a user, a stress level for the entity controlling the vehicle (1) to operate the vehicle (1).

7. The computer system (600) according to any of claims 1-6 wherein the level of difficulty of the set of routes (2) and the current skill level of the entity controlling the vehicle (1) are respectively classified as values or other comparable units, and wherein the processing circuitry (602) is configured to select the route of the set of routes (2) for the vehicle (1) to follow such that the value of the current skill level is less than or equal to the level of difficulty of the selected route.

8. The computer system (600) according to any of claims 1-7, wherein the characteristics of the vehicle (1) comprises physical attributes, wherein the physical attributes of the vehicle (1) comprises any one or more out of:
- a type of the vehicle (1),
- number of and/or type of vehicle units of the vehicle (1),
- wheelbase and/or width of the vehicle (1),
- tire wear of tires of the vehicle (1),
- number of and/or type of articulation or coupling points of the vehicle (1),
- an axle configuration of the vehicle (1),
- availability of steered axles of towed vehicle units of the vehicle (1), and
- a load status or load condition of the vehicle (1),
- a mass of the vehicle (1); and/or
wherein the characteristics of the vehicle (1) comprises capabilities of the vehicle (1), and wherein the capabilities of the vehicle (1) comprises any one or more out of:
- capabilities of motion support devices of the vehicle (1), and
- capabilities of adjusting axle height of axles of the vehicle (1),
- steering capabilities of axles of the vehicle (1),
- tire capabilities of the vehicle (1), and
- one or more capabilities for distributing load.

9. The computer system (600) according to any of claims 1-8, wherein the vehicle (1) comprises one or more assisting functionalities for aiding the current skill level of the entity controlling the vehicle (1), the one or more assisting functionalities comprising any one or more out of:
- steering assistance for one or more predefined maneuvers or an automated steering system,
- lane keeping assistance,
- one or more driver intervention functionalities for when detected that a driver of the vehicle (1) is in need of automated control, and
- one or more stability control functionalities.

10. A vehicle comprising and/or being controlled by the computer system (600) according to any one of claims 1-9.

11. A computer-implemented method for selecting a route out of a set of routes (2) for a vehicle (1) to follow, the method comprising:
- obtaining (201, 501) a level of difficulty of the set of routes (2), wherein the level of difficulty is classified based on characteristics of the vehicle (1),
- obtaining (202, 502) a current skill level of an entity controlling the vehicle (1),
- based on the level of difficulty and the current skill level of the entity, selecting (204, 503) a route of the set of routes (2) for the vehicle (1) to travel such that the current skill level of the entity is sufficient for operating the vehicle (1) with respect to the classified level of difficulty of the selected route,
the method further comprising:
- obtaining (203) information of one or more assisting functionalities of the vehicle, and selecting (204) the route such that the current skill level of the entity is sufficient for operating the vehicle (1) with respect to the classified level of difficulty of the selected route by accounting for utilization of at least one of the one or more assisting functionalities for the set of routes (2)

12. The method according to claim 11 further comprising any one or more out of:
- obtaining (201) the level of difficulty of the set of routes (2) by any one or both of:
∘ receiving an indication of the level of difficulty of at least a part of the set of routes (2), and
∘ classifying the level of difficulty of at least a part of the set of routes (2) based on the characteristics of the vehicle (1);
- obtaining (202) the current skill level of the entity controlling the vehicle (1) comprises:
∘ receiving an input indicating the current skill level, and/or
∘ classifying the current skill level of the entity controlling the vehicle (1).

13. A computer program product comprising program code for performing, when executed by the processing circuitry (602), the method of any of claims 11-12.

14. A non-transitory computer-readable storage medium comprising instructions, which when executed by the processing circuitry (602), cause the processing circuitry (602) to perform the method of any of claims 11-12.

## Patentansprüche

1. Computersystem (600), umfassend eine Verarbeitungsschaltung (602), die konfiguriert ist, um eine Route aus einem Satz von Routen (2) auszuwählen, der ein Fahrzeug (1) folgen soll, wobei die Verarbeitungsschaltung (602) ferner konfiguriert ist zum:
- Erhalten eines Schwierigkeitsniveaus des Satzes von Routen (2), wobei das Schwierigkeitsniveau basierend auf Eigenschaften des Fahrzeugs (1) klassifiziert wird,
- Erhalten eines aktuellen Fähigkeitsniveaus einer Entität, die das Fahrzeug (1) steuert,
- basierend auf dem Schwierigkeitsniveau und dem aktuellen Fähigkeitsniveau der Entität, Auswählen einer Route aus dem Satz von Routen (2), die das Fahrzeug (1) befahren soll, derart, dass das aktuelle Fähigkeitsniveau der Entität zum Führen des Fahrzeugs (1) hinsichtlich des klassifizierten Schwierigkeitsniveaus der ausgewählten Route ausreichend ist,
wobei die Verarbeitungsschaltung (602) ferner konfiguriert ist zum:
- Erhalten von Informationen über eine oder mehrere Assistenzfunktionalitäten des Fahrzeugs, und
- Auswählen der Route derart, dass das aktuelle Fähigkeitsniveaus der Entität zum Führen des Fahrzeugs (1) hinsichtlich des klassifizierten Schwierigkeitsniveau der ausgewählten Route ausreichend ist, durch Berücksichtigen einer Nutzung mindestens einer der einen oder mehreren Assistenzfunktionalitäten für den Satz von Routen (2).

2. Computersystem (600) nach Anspruch 1, wobei das Schwierigkeitsniveau des Satzes von Routen (2) ferner für jede jeweilige Route klassifiziert wird, basierend auf einem oder mehreren von:
- Eigenschaften der jeweiligen Route,
- einer Verkehrssituation der jeweiligen Route,
- Umgebungsdaten der jeweiligen Route, vorzugsweise umfassend Wetterdaten der jeweiligen Route,
- historischen Fahrdaten eines oder mehrerer Fahrzeuge, die die jeweilige Route befahren, und
- einem Fahrprotokoll der Entität, die das Fahrzeug (1) steuert.

3. Computersystem (600) nach einem der Ansprüche 1 bis 2, wobei die Verarbeitungsschaltung (602) konfiguriert ist, um das Schwierigkeitsniveau des Satzes von Routen (2) zu erhalten durch Konfiguriertwerden zu einem oder beiden beliebigen von:
- Empfangen einer Angabe des Schwierigkeitsniveaus von mindestens einem Teil des Satzes von Routen (2), und
- Klassifizieren des Schwierigkeitsniveaus mindestens eines Teils des Satzes von Routen (2) basierend auf den Eigenschaften des Fahrzeugs (1).

4. Computersystem (600) nach einem der Ansprüche 1 bis 3, wobei die Verarbeitungsschaltung (602) konfiguriert ist, um das aktuelle Fähigkeitsniveau der Entität zu erhalten, die das Fahrzeug (1) steuert, durch Konfiguriertwerden, um eine Eingabe zu empfangen, die das aktuelle Fähigkeitsniveau angibt, und/oder durch Konfiguriertwerden, um das aktuelle Fähigkeitsniveau der Entität zu klassifizieren, die das Fahrzeug (1) steuert.

5. Computersystem (600) nach Anspruch 4, wobei die Verarbeitungsschaltung (602) konfiguriert ist, um das aktuelle Fähigkeitsniveau der Entität zu klassifizieren, die das Fahrzeug (1) steuert, durch Konfiguriertwerden zum:
- Erhalten eines Satzes von Daten, der sich darauf bezieht, wann die Entität das Fahrzeug (1) steuert, der Satz von Daten umfassend ein oder mehrere beliebige aus
∘ einem Fahrprotokoll, und
∘ Steuereingabe zum Steuern des Fahrzeugs (1),
∘ einem oder mehreren Fahrverhaltensparametern, die angeben, ob ein oder mehrere jeweilige Manöver und/oder Fahrzeugbewegungen eine oder mehrere jeweilige vordefinierte Bedingungen erfüllen,
∘ Sensordaten eines oder mehrerer Sensoren (20) des Fahrzeugs (1),
∘ wenn die Entität, die das Fahrzeug (1) steuert, ein Benutzer ist, Sensordaten des einen oder der mehreren Sensoren (20), umfassend Messungen des Benutzers,
∘ Bewegungsdaten, die einen oder mehrere Bewegungsparameter des Fahrzeugs (1) angeben; und
- Klassifizieren des aktuellen Fähigkeitsniveaus der Entität, die das Fahrzeug (1) steuert, basierend auf dem erhaltenen Satz von Daten.

6. Computersystem (600) nach einem der Ansprüche 4 bis 5, wobei die empfangene Eingabe einen oder mehrere beliebige umfasst von:
- einem Konfidenzniveau für die Entität, die das Fahrzeug (1) steuert, um das Fahrzeug (1) zu fahren,
- wenn die Entität, die das Fahrzeug (1) steuert, ein Benutzer ist, einem Ermüdungsniveau für die Entität, die das Fahrzeug (1) steuert, zum Fahren des Fahrzeugs (1), und
- wenn die Entität, die das Fahrzeug (1) steuert, ein Benutzer ist, einem Stressniveau für die Entität, die das Fahrzeug (1) steuert, um das Fahrzeug (1) zu fahren.

7. Computersystem (600) nach einem der Ansprüche 1 bis 6, wobei das Schwierigkeitsniveau des Satzes von Routen (2) und das aktuelle Fähigkeitsniveau der Entität, die das Fahrzeug (1) steuert, jeweils als Werte oder andere vergleichbare Einheiten klassifiziert sind, und wobei die Verarbeitungsschaltung (602) konfiguriert ist, um die Route des Satzes von Routen (2), der das Fahrzeug (1) folgen soll, derart auszuwählen, dass der Wert des aktuellen Fähigkeitsniveaus kleiner als oder gleich dem Schwierigkeitsniveau der ausgewählten Route ist.

8. Computersystem (600) nach einem der Ansprüche 1 bis 7, wobei die Eigenschaften des Fahrzeugs (1) physische Attribute umfasst, wobei die physischen Attribute des Fahrzeugs (1) ein oder mehrere beliebige umfasst aus:
- einer Art des Fahrzeugs (1),
- Anzahl und/oder Art der Fahrzeugeinheiten des Fahrzeugs (1),
- Radstand und/oder Breite des Fahrzeugs (1),
- Reifenverschleiß der Reifen des Fahrzeugs (1),
- Anzahl und/oder Art von Gelenk- oder Kupplungspunkten des Fahrzeugs (1),
- einer Achskonfiguration des Fahrzeugs (1),
- Verfügbarkeit von gelenkten Radachsen von gezogenen Fahrzeugeinheiten des Fahrzeugs (1), und
- einem Laststatus oder einem Lastzustand des Fahrzeugs (1),
- einer Masse des Fahrzeugs (1); und/oder
wobei die Eigenschaften des Fahrzeugs (1) Vermögen des Fahrzeugs (1) umfasst, und wobei die Vermögen des Fahrzeugs (1) ein oder mehrere beliebige umfasst aus:
- Vermögen von Bewegungsunterstützungsvorrichtungen des Fahrzeugs (1), und
- Vermögen zum Einstellen der Achshöhe von Achsen des Fahrzeugs (1),
- Lenkvermögen von Achsen des Fahrzeugs (1),
- Reifenvermögen des Fahrzeugs (1), und
- eine oder mehrere Vermögen zum Verteilen von Last.

9. Computersystem (600) nach einem der Ansprüche 1 bis 8, wobei das Fahrzeug (1) eine oder mehrere Assistenzfunktionalitäten zum Unterstützen des aktuellen Fähigkeitsniveaus der Entität umfasst, die das Fahrzeug (1) steuert, die eine oder die mehreren Assistenzfunktionalitäten umfassend eine oder mehrere beliebige aus:
- Lenkassistenz für ein oder mehrere vordefinierte Manöver oder ein automatisiertes Lenksystem,
- Spurhalteassistenz,
- einer oder mehreren Fahrereingriffsfunktionalitäten für den Fall, dass erfasst wird, dass ein Fahrer des Fahrzeugs (1) einer automatisierten Steuerung bedarf, und
- einer oder mehreren Stabilitätssteuerungsfunktionalitäten.

10. Fahrzeug, das das Computersystem (600) nach einem der Ansprüche 1 bis 9 umfasst und/oder durch dieses gesteuert wird.

11. Computerimplementiertes Verfahren zum Auswählen einer Route aus einem Satz von Routen (2), der ein Fahrzeug (1) folgen soll, das Verfahren umfassend:
- Erhalten (201, 501) eines Schwierigkeitsniveaus des Satzes von Routen (2), wobei das Schwierigkeitsniveau basierend auf Eigenschaften des Fahrzeugs (1) klassifiziert wird,
- Erhalten (202, 502) eines aktuellen Fähigkeitsniveaus einer Entität, die das Fahrzeug (1) steuert,
- basierend auf dem Schwierigkeitsniveau und dem aktuellen Fähigkeitsniveau der Entität, Auswählen (204, 503) einer Route aus dem Satz von Routen (2), die von dem Fahrzeug (1) befahren werden soll, derart, dass das aktuelle Fähigkeitsniveau der Entität zum Fahren des Fahrzeugs (1) hinsichtlich des eingestuften Schwierigkeitsniveaus der ausgewählten Route ausreichend ist,
das Verfahren ferner umfassend:
- Erhalten (203) von Informationen über eine oder mehrere Assistenzfunktionalitäten des Fahrzeugs und Auswählen (204) der Route derart, dass das aktuelle Fähigkeitsniveau der Entität zum Fahren des Fahrzeugs (1) hinsichtlich des klassifizierten Schwierigkeitsniveaus der ausgewählten Route ausreichend ist, durch Berücksichtigen der Nutzung mindestens einer der einen oder der mehreren Assistenzfunktionalitäten für den Satz von Routen (2)

12. Verfahren nach Anspruch 11, ferner umfassend eines oder mehrere beliebige aus:
- Erhalten (201) des Schwierigkeitsniveaus des Satzes von Routen (2) durch eine oder beide beliebige von:
∘ Empfangen einer Angabe des Schwierigkeitsniveaus mindestens eines Teils des Satzes von Routen (2), und
∘ Klassifizieren des Schwierigkeitsniveaus von mindestens einem Teil des Satzes von Routen (2) basierend auf den Eigenschaften des Fahrzeugs (1);
- das Erhalten (202) des aktuellen Fähigkeitsniveaus der Entität, die das Fahrzeug (1) steuert, umfasst:
∘ Empfangen einer Eingabe, die die aktuelle Fähigkeitsstufe angibt, und/oder
∘ Klassifizieren des aktuellen Fähigkeitsniveaus der Entität, die das Fahrzeug (1) steuert.

13. Computerprogrammprodukt, umfassend einen Programmcode zum Durchführen, wenn er durch die Verarbeitungsschaltung (602) ausgeführt wird, des Verfahrens nach einem der Ansprüche 11 bis 12.

14. Nichtflüchtiges, computerlesbares Speichermedium, umfassend Anweisungen, die, wenn sie durch die Verarbeitungsschaltung (602) ausgeführt werden, die Verarbeitungsschaltung (602) veranlassen, das Verfahren nach einem der Ansprüche 11 bis 12 durchzuführen.

## Revendications

1. Système informatique (600) comprenant un ensemble de circuits (602) configuré pour choisir un itinéraire parmi un ensemble d'itinéraires (2) qu'un véhicule (1) doit suivre, l'ensemble de circuits de traitement (602) étant configuré pour :
- obtenir un niveau de difficulté de l'ensemble d'itinéraires (2), dans lequel le niveau de difficulté est classé en fonction de caractéristiques du véhicule (1),
- obtenir un niveau de compétence actuel d'une entité commandant le véhicule (1),
- en fonction du niveau de difficulté et du niveau de compétence actuel de l'entité, choisir un itinéraire de l'ensemble d'itinéraires (2) que le véhicule (1) doit parcourir de telle sorte que le niveau de compétence actuel de l'entité soit suffisant pour faire fonctionner le véhicule (1) par rapport au niveau de difficulté classé de l'itinéraire choisi,
dans lequel l'ensemble de circuits de traitement (602) est en outre configuré pour :
- obtenir des informations sur une ou plusieurs fonctionnalités auxiliaires du véhicule, et
- choisir l'itinéraire de telle sorte que le niveau de compétence actuel de l'entité soit suffisant pour faire fonctionner le véhicule (1) par rapport au niveau de difficulté classé de l'itinéraire choisi en tenant compte de l'utilisation d'au moins l'une parmi la ou les fonctionnalités auxiliaires pour l'ensemble d'itinéraires (2).

2. Système informatique (600) selon la revendication 1, dans lequel le niveau de difficulté de l'ensemble d'itinéraires (2) est en outre classé pour chaque itinéraire respectif en fonction de l'un quelconque ou de plusieurs quelconques parmi :
- des caractéristiques de l'itinéraire respectif,
- une situation de circulation de l'itinéraire respectif,
- des données environnementales de l'itinéraire respectif, comprenant de préférence des données météorologiques de l'itinéraire respectif,
- des enregistrements de conduite historiques d'un ou de plusieurs véhicules empruntant l'itinéraire respectif, et
- un enregistrement de conduite de l'entité commandant le véhicule (1).

3. Système informatique (600) selon l'une quelconque des revendications 1 à 2, dans lequel l'ensemble de circuits de traitement (602) est configuré pour obtenir le niveau de difficulté de l'ensemble d'itinéraires (2) en étant configuré pour :
- recevoir une indication du niveau de difficulté d'au moins une partie de l'ensemble d'itinéraires (2), et/ou
- classer le niveau de difficulté d'au moins une partie de l'ensemble d'itinéraires (2) en fonction des caractéristiques du véhicule (1).

4. Système informatique (600) selon l'une quelconque des revendications 1 à 3, dans lequel l'ensemble de circuits de traitement (602) est configuré pour obtenir le niveau de compétence actuel de l'entité commandant le véhicule (1) en étant configuré pour recevoir une entrée indiquant le niveau de compétence actuel, et/ou en étant configuré pour classer le niveau de compétence actuel de l'entité commandant le véhicule (1).

5. Système informatique (600) selon la revendication 4 dans lequel l'ensemble de circuits de traitement (602) est configuré pour classer le niveau de compétence actuel de l'entité commandant le véhicule (1) en étant configuré pour :
- obtenir un ensemble de données relatives au moment où l'entité commande le véhicule (1), l'ensemble de données comprenant un ou plusieurs quelconques parmi
∘ un enregistrement de conduite, et
∘ une entrée de commande pour commander le véhicule (1),
∘ un ou plusieurs paramètres de comportement de conduite indiquant si une ou plusieurs manœuvres respectives et/ou un ou plusieurs mouvements respectifs de véhicule répondent à une ou plusieurs conditions prédéfinies respectives,
∘ des données de capteur d'un ou de plusieurs capteurs (20) du véhicule (1),
∘ lorsque l'entité commandant le véhicule (1) est un utilisateur, des données de capteur des un ou plusieurs capteurs (20) comprenant des mesures de l'utilisateur,
∘ des données de mouvement indiquant un ou plusieurs paramètres de mouvement du véhicule (1) ; et
- classer le niveau de compétence actuel de l'entité commandant le véhicule (1) en fonction de l'ensemble de données obtenu.

6. Système informatique (600) selon l'une quelconque des revendications 4 à 5 dans lequel l'entrée reçue indique un ou plusieurs parmi :
- un niveau de confiance pour que l'entité commandant le véhicule (1) fasse fonctionner le véhicule (1),
- lorsque l'entité commandant le véhicule (1) est un utilisateur, un niveau de fatigue pour que l'entité commandant le véhicule (1) fasse fonctionner le véhicule (1), et
- lorsque l'entité commandant le véhicule (1) est un utilisateur, un niveau de stress pour que l'entité commandant le véhicule (1) fasse fonctionner le véhicule (1).

7. Système informatique (600) selon l'une quelconque des revendications 1 à 6 dans lequel le niveau de difficulté de l'ensemble d'itinéraires (2) et le niveau de compétence actuel de l'entité commandant le véhicule (1) sont respectivement classés en tant que valeurs ou autres unités comparables, et dans lequel l'ensemble de circuits de traitement (602) est configuré pour choisir l'itinéraire de l'ensemble d'itinéraires (2) que le véhicule (1) doit suivre de telle sorte que la valeur du niveau de compétence actuel soit inférieure ou égale au niveau de difficulté de l'itinéraire choisi.

8. Système informatique (600) selon l'une quelconque des revendications 1 à 7, dans lequel les caractéristiques du véhicule (1) comprennent des attributs physiques, dans lequel les attributs physiques du véhicule (1) comprennent un ou plusieurs quelconques parmi :
- un type du véhicule (1),
- nombre et/ou type d'unités de véhicule du véhicule (1),
- empattement et/ou largeur du véhicule (1),
- usure des pneus du véhicule (1),
- nombre et/ou type de points d'articulation ou d'accouplement du véhicule (1),
- une configuration d'essieu du véhicule (1),
- disponibilité d'essieux directeurs d'unités de véhicule remorquées du véhicule (1), et
- un état de charge ou une condition de charge du véhicule (1),
- une masse du véhicule (1) ; et/ou
dans lequel les caractéristiques du véhicule (1) comprennent des capacités du véhicule (1), et dans lequel les capacités du véhicule (1) comprennent une ou plusieurs quelconques parmi :
- des capacités de dispositifs d'aide au mouvement du véhicule (1), et
- des capacités de réglage de hauteur d'essieu d'essieux du véhicule (1),
- des capacités de direction d'essieux du véhicule (1),
- des capacités de pneus du véhicule (1), et
- une ou plusieurs capacités de répartition de la charge.

9. Système informatique (600) selon l'une quelconque des revendications 1 à 8, dans lequel le véhicule (1) comprend une ou plusieurs fonctionnalités auxiliaires destinées à assister le niveau de compétence actuel de l'entité commandant le véhicule (1), la ou les fonctionnalités auxiliaires comprenant un ou plusieurs quelconques parmi :
- assistance à la direction pour une ou plusieurs manœuvres prédéfinies ou un système de direction automatisé,
- assistance au maintien dans la voie,
- une ou plusieurs fonctionnalités d'intervention de conducteur lorsqu'il est détecté qu'un conducteur du véhicule (1) a besoin d'une commande automatisée, et
- une ou plusieurs fonctionnalités de commande de stabilité.

10. Véhicule comprenant et/ou étant commandé par le système informatique (600) selon l'une quelconque des revendications 1 à 9.

11. Procédé mis en œuvre par ordinateur permettant de choisir un itinéraire parmi un ensemble d'itinéraires (2) qu'un véhicule (1) doit suivre, le procédé comprenant :
- l'obtention (201, 501) d'un niveau de difficulté de l'ensemble d'itinéraires (2), dans lequel le niveau de difficulté est classé en fonction de caractéristiques du véhicule (1),
- l'obtention (202, 502) d'un niveau de compétence actuel d'une entité commandant le véhicule (1),
- en fonction du niveau de difficulté et du niveau de compétence actuel de l'entité, le choix (204, 503) d'un itinéraire de l'ensemble d'itinéraires (2) que le véhicule (1) doit parcourir de telle sorte que le niveau de compétence actuel de l'entité soit suffisant pour faire fonctionner le véhicule (1) par rapport au niveau de difficulté classé de l'itinéraire choisi,
le procédé comprenant en outre :
- l'obtention (203) d'informations sur une ou plusieurs fonctionnalités auxiliaires du véhicule, et le choix (204) de l'itinéraire de telle sorte que le niveau de compétence actuel de l'entité soit suffisant pour faire fonctionner le véhicule (1) par rapport au niveau de difficulté classé de l'itinéraire choisi en tenant compte de l'utilisation d'au moins l'une parmi la ou les fonctionnalités auxiliaires pour l'ensemble d'itinéraires (2)

12. Procédé selon la revendication 11 comprenant en outre l'un quelconque ou plusieurs parmi :
- l'obtention (201) du niveau de difficulté de l'ensemble d'itinéraires (2) par l'un quelconque ou les deux parmi :
∘ la réception d'une indication du niveau de difficulté d'au moins une partie de l'ensemble d'itinéraires (2), et
∘ le classement du niveau de difficulté d'au moins une partie de l'ensemble d'itinéraires (2) en fonction des caractéristiques du véhicule (1) ;
- l'obtention (202) du niveau de compétence actuel de l'entité commandant le véhicule (1) comprend :
∘ la réception d'une entrée indiquant le niveau de compétence actuel, et/ou
∘ le classement du niveau de compétence actuel de l'entité commandant le véhicule (1).

13. Produit-programme d'ordinateur comprenant un code de programme permettant de mettre en œuvre, lorsqu'il est exécuté par l'ensemble de circuits de traitement (602), le procédé selon l'une quelconque des revendications 11 à 12.

14. Support de stockage non transitoire lisible par ordinateur comprenant des instructions, qui lorsqu'elles sont exécutées par l'ensemble de circuits de traitement (602), amènent l'ensemble de circuits de traitement (602) à mettre en œuvre le procédé selon l'une quelconque des revendications 11 à 12.
